# EUROPEAN PATENT APPLICATION

(11) **EP 2 690 402 A1**
(43) Date of publication of application: **29.01.2014**
(21) Application number: 12177451.7
(22) Date of filing: 23.07.2012
(51) Int. Cl.: G01C 21/20, G08B 7/06

(54) **Method and mobile device for guiding a user in an industrial process environment**

(71) Applicant: ABB Research Ltd., 8050 Zürich (CH)
(72) Inventor: Brönmark, Jonas, 722 27 Västerås (SE); Alfredsson, Fredrik, 724 71 Västerås (SE); Olausson, Martin, 724 82 Västerås (SE); Vartiainen, Elina, 722 18 Västerås (SE)
(74) Representative: Savela, Reino Aleksi

(57) **Abstract**

The present disclosure relates to a method of guiding a user of a mobile device in an industrial process environment in order to evacuate the user in case of an event that results in impaired visibility in the industrial process environment. The method comprises receiving (S₁) instructions from an industrial control system to provide guidance to an exit of the industrial process environment in response to an event that results in impaired visibility in the industrial process environment, the instructions being received by the mobile device; obtaining (S₄) a direction of a first route leading to a first place of exit of the industrial process environment based on a location of the mobile device; and generating (S₅) a 3-d sound simulating an origination from the direction so as to allow the user to move in the first direction. A mobile device carrying out the method is also presented herein.

## Description

### TECHNICAL FIELD

The present disclosure relates to a method and device for guiding a user in an industrial process environment.

### BACKGROUND

Industrial processes within industries such as oil and gas, pulp and paper, metals and mining, power generation, and petrochemical refineries utilise industrial process components, i.e. process equipment, for allowing the steps of the industrial process to be carried out. Such process equipment may for example be tanks, valves, motors or controllers.

Process equipment is typically provided with one or more sensors measuring processes variables such that the industrial process may properly be monitored by a monitoring and/or control system. Events which necessitate evacuation of personnel from an industrial process environment, e.g. a plant or a substation, of an industrial process may by means of these sensors and/or by means of smoke detectors and similar devices be detected. When an event necessitating evacuation has occurred, the first priority is to evacuate any persons present in the industrial process environment. If a person in the industrial process environment is unfamiliar with the layout of the industrial process environment, or if the visibility in the industrial process environment has been impaired by smoke and/or a power failure, the evacuation may be rendered more difficult. There is hence a need to facilitate the evacuation of personnel from an industrial process environment in case of an emergency.

### SUMMARY

In view of the above, it would be desirable to be able to provide a method and a mobile device that facilitates the evacuation of a person located in an industrial process environment when an event necessitating evacuation has occurred.

Hence, according to a first aspect of the present disclosure there is provided a method of guiding a user of a mobile device in an industrial process environment, wherein the method comprises: receiving instructions from an industrial control system to provide guidance to an exit of the industrial process environment in response to an event that results in impaired visibility in the industrial process environment, the instructions being received by the mobile device; obtaining a direction of a first route leading to a first place of exit of the industrial process environment based on a location of the mobile device; and generating a 3-d sound simulating an origination from the direction so as to allow the user to move in the direction.

An effect that is obtainable thereby is that a user, e.g. a maintenance engineer, will be able to safely navigate through the industrial process environment to a place of exit when the vision is impaired in the industrial process environment. Hence, safe evacuation of a person located in the industrial process environment when a visibility impairing event has occurred can be provided.

According to one embodiment the obtaining of the direction of the first route is further based on a location of the event.

One embodiment comprises obtaining a location of the first place of exit from the industrial process environment based on the location of the mobile device, wherein the obtaining of the first direction is further based on the location of the first place of exit.

According to one embodiment the obtaining of the location of the first place of exit is further based on the location of the event.

One embodiment comprises obtaining a direction of a second route if the industrial control system has determined that a hazardous area caused by the event has spread to the first route.

According to one embodiment the second route leads to a second place of exit.

According to one embodiment the user carries the mobile device, the location of the mobile device thereby being indicative of a location of the user.

One embodiment comprises obtaining the location of the mobile device.

In a second aspect of the present disclosure there is provided a computer program comprising computer-executable components for causing a mobile device to perform the steps recited in the first aspect presented herein when the computer-executable components are run on a processor included in the mobile device.

According to a third aspect of the present disclosure there is provided a computer program product comprising a computer readable medium having the computer program according to the second aspect embodied therein.

According to a fourth aspect of the present disclosure there is provided a mobile device arranged to guide a user of the mobile device in an industrial process environment, wherein the mobile device comprises: a processor arranged to: receive instructions from an industrial control system to provide guidance to an exit of the industrial process environment in response to an event resulting in impaired visibility in the industrial process environment; obtain a direction of a first route leading to a first place of exit of the industrial process environment based on the location of the mobile device, and to generate a 3-d sound simulating an origination from the direction so as to allow the user to move in the direction.

According to one embodiment the processor is arranged to obtain the direction of the first route further based on a location of the event.

According to one embodiment the processor is arranged to obtain a location of the first place of exit from the industrial process environment based on the location of the mobile device, wherein processor is arranged to obtain the first direction further based on the location of the first place of exit.

According to one embodiment the processor is arranged to obtain the location of the first place of exit further based on the location of the event.

According to one embodiment the processor is arranged to obtain a direction of a second route if the industrial control system has determined that a hazardous area caused by the event has spread to the first route.

According to one embodiment, the processor is arranged to obtain the location of the mobile device.

One embodiment comprises an earmuff having speakers arranged to provide 3-d audio sound generated by the processor.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise. Moreover, any step in a method need not necessarily have to be carried out in the presented order, unless explicitly stated otherwise.

### BRIEF DESCRIPTION OF THE DRAWINGS

The specific embodiments of the inventive concept will now be described, by way of example, with reference to the accompanying drawings, in which:
Figs 1a-b shows examples of a mobile device for guiding a user thereof in an industrial process environment;
Fig. 2 is a top view of a user of a mobile device of Fig. 1a or 1b;
Fig. 3 is a flowchart of a method of guiding a user of a mobile device in an industrial process; and
Figs 4a-c depict top views of a user of a mobile device of Fig. 1a or 1b being guided in an industrial process environment when an event causing impaired vision in the industrial process environment has occurred.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

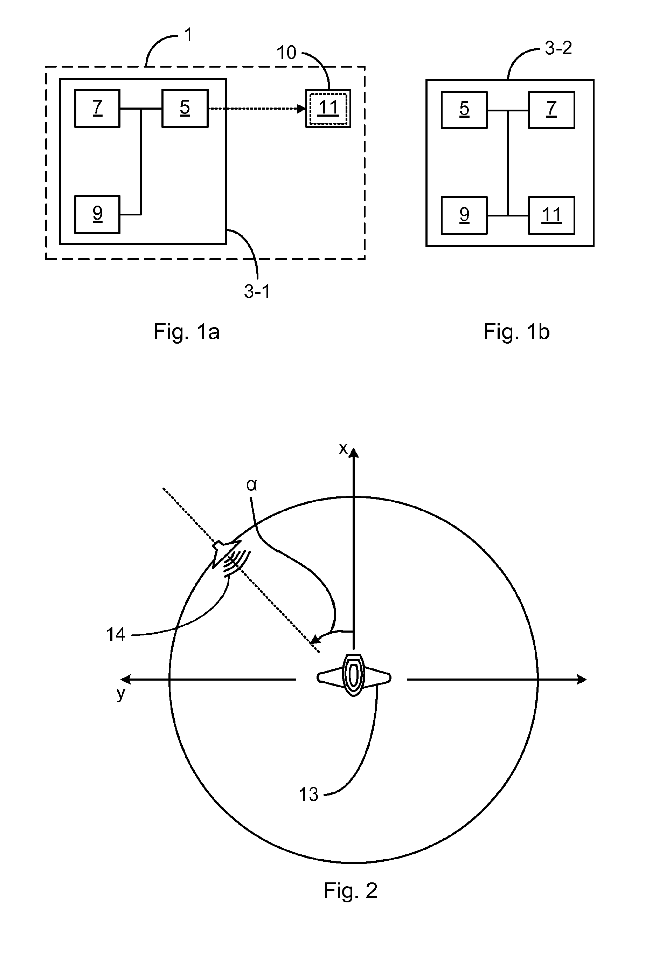

Fig. 1a depicts a system 1 comprising a first example of mobile device 3-1 for guiding a user thereof in an industrial process environment, and an ear protection unit 10. An industrial process is to be understood to mean a procedure that involves chemical, electrical or mechanical steps to aid in manufacturing, production, power generation, fabrication, or refining. Examples of such industrial processes are processes relating to the refining of oil and gas, the petrochemical industry, power generation, power transmission, power distribution, metals and mining, chemical industry, pulp and paper, or automation in e.g. the manufacturing industry or food industry. An industrial process environment is an enclosed area in which chemical, electrical or mechanical steps of the industrial process are carried out. Examples of an industrial process environment are a plant floor or a substation.

The mobile device 3-1 comprises a processor 5, a memory 7, i.e. a computer readable medium having software stored therein which can be loaded into the processor to carry out the method presented herein, and an antenna 9. The mobile device 3-1 can for example be a smart phone, a tablet computer, or a portable device especially manufactured for guiding a user of the mobile device in an industrial process environment. The portion of the method presented herein and executed by the mobile device 3-1 of the first example may advantageously be implemented as a downloadable application.

The mobile device 3-1 is arranged to be connected to the ear protecting unit 10, e.g. an earmuff, which has two pads to protect the ears of a user of the ear protection unit 10. Each cap of the ear protection unit comprises a speaker 11 to allow the reproduction of 3 dimensional (3-d) sound. The ear protection unit 10 may be connected to the mobile device 3-1 with a cord or cordlessly, e.g. by means of Bluetooth®.

Fig. 1b depicts a second example of a mobile device 3-2 for guiding a user thereof in an industrial process environment. The mobile device 3-2 comprises a processor 5, a memory 7, i.e. a computer readable medium having software stored therein which can be loaded into the processor to carry out the method presented herein, an antenna 9 and speakers 11. According to the second example, the mobile device 3-2 is an ear protection unit, e.g. an earmuff, comprising the electronic components necessary to perform the method of this disclosure.

According to one variation of each of the mobile devices of the first and the second example, the processor may be arranged to filter out ambient sound. According to this variation, the mobile devices of each of the first and the second example may comprise a microphone for recording ambient sound, wherein the processor may be arranged to create sound waves that interfere with the ambient sound so as provide a destructive interference effect.

Each of the mobile devices 3-1 and 3-2 is arranged to wirelessly communicate with an industrial control system such as a Distributed Control System (DCS), a Supervisory Control And Data Acquisition system (SCADA) or a combination of a SCADA system and DCS system. An example of an industrial control system for this purpose is the ABB® 800xA control system.

The processor 5 of each mobile device 3-1 and 3-2 is arranged to generate a 3-dimensional sound that can be played by the speakers 11 when the processor 5 receives instructions to provide guidance of a user of the mobile device 3-2, 3-2 from an industrial control system in response to an event that results in impaired visibility in the industrial process environment.

Fig. 2 shows a top view of a user 13 of a mobile device 3-1, 3-2 in an imaginary reference coordinate system. The processor 5 is arranged to generate 3-d sound that simulates the origination of the sound from any direction in the two-dimensional coordinate system in which the speakers 11 of the system 1 or mobile device 3-2 are centred at the origin. In the example in Fig. 2, sound is generated that simulates the origination of sound 14 at an angle α from the x-axis, i.e. at an angle α to the left of the user 13. It is also envisaged that according to one embodiment the processor 5 is be able to create sound that is perceived to originate from any direction in a three-dimensional coordinate system in which the speakers 11 of the system 1 or mobile device 3-2 are centred at the origin.

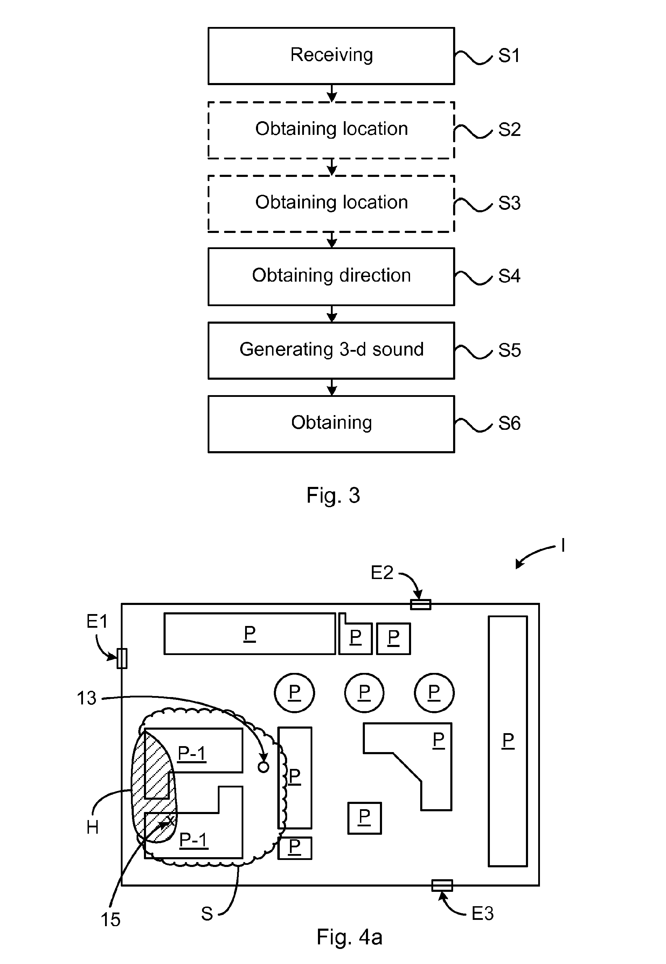

With reference to Figs 3 and 4a-c, the operation of the mobile device 3-1, 3-2 when guiding a user thereof in an industrial process environment will now be described in more detail.

A user of the mobile device 3-1, 3-2, which typically is a maintenance engineer, advantageously carries with him, or her, the system 1 including the mobile device 3-1 of the first example and the ear protection unit 10, or alternatively the mobile device 3-2 of the second example, every time the maintenance engineer is situated in an industrial process environment. By means of the system 1 or the mobile device 3-2, the user thereof may be guided to an exit of the industrial process environment in case an event causing impaired vision in the industrial process environment occurs.

The industrial control system is arranged to detect when an event necessitating the evacuation of the maintenance engineer from the industrial process environment has occurred, e.g. when a fire has broken out, if a fault condition resulting in smoke has occurred, if there is a power cut, or any other event resulting in impaired visibility. Such events are normally detected by means of sensors arranged to measure process variables of the industrial process, or by means of smoke detectors, circuit breakers or similar equipment arranged to detect conditions arising due to a fault in an industrial process.

Thus, in a step S1, instructions to provide guidance to an exit are received by the mobile device 3-1, 3-2 when an event causing impaired vision in the industrial process environment in which the mobile device 3-1, 3-2, and thus the user thereof, is located has occurred. The instructions are provided wirelessly to the mobile device 3-1, 3-2 by the industrial control system which monitors and controls the industrial process when it has received an alarm or other indication that an event necessitating evacuation has occurred.

In an optional step S2, the location of the mobile device 3-1, 3-2 in the industrial process environment is obtained by the mobile device 3-1, 3-2. The location of the mobile device may for example be obtained by means of a Global Navigation Satellite System (GNSS) such as the Global Positioning System (GPS), a Wi-Fi based positioning system or other suitable indoor positioning systems. In a first variation of such an embodiment, the location of the mobile device 3-1, 3-2 may be determined by the mobile device 3-1, 3-2 wherein the location or position is sent to the industrial control system such that the industrial control system may determine a direction in which the mobile device 3-1, 3-2 is to provide guidance such that the user of the mobile device 3-1, 3-2 may be evacuated from the industrial process environment. In a second variation of such an embodiment, the mobile device 3-1, 3-2 is arranged to transmit signals which can be used by the industrial control system to determine the location or position of the mobile device 3-1, 3-2 wherein the location as determined by the industrial control system is sent to the mobile device 3-1, 3-2. The mobile device 3-1, 3-2 thus obtains its location or position in the industrial process environment.

In one embodiment a location of a first place of exit from the industrial process environment is obtained in a step S3 based on the location of the mobile device 3-1, 3-2. Step S3 is also optional, as both the location of the mobile device 3-1, 3-2 and the location of the first place of exit may be determined by the industrial control system instead of the mobile device 3-1, 3-2.

In a step S4, a direction of a first route, leading to a first place of exit of the industrial process environment is obtained by the mobile device 3-1, 3-2 based on the location of the mobile device 3-1, 3-2. The direction of the first route may be obtained either by calculation by the processor 5 of the mobile device 3-1, 3-2, or it may be obtained from the industrial control system with which the mobile device 3-1, 3-2 is arranged to communicate.

The step S4 of obtaining the direction is according to one embodiment further based on the location of the first place of exit. Hence, when the location of the mobile device 3-1, 3-2 and the location of the event have been determined, a safe place of exit may be determined. It is however to be noted that it is not necessary that the mobile device 3-1, 3-2 obtains the location of the first place of exit; it is envisaged that according to one embodiment an update of the direction to the first place of exit is successively obtained from the industrial control system as the mobile device 3-1, 3-2, and thus the user, navigates through the industrial process environment. Thereby only that part of the first route is provided which is necessary at each instance for guiding the person in the industrial process environment to a safe exit. It may for example happen that the first route has become unsafe after the guidance has commenced, as for example a fire may have spread through the industrial process environment, resulting in that the industrial control system changes the first route to a second route. If that is the case, the second route may lead to a second place of exit that provides a safer exit than the first place of exit.

The step S4 of obtaining the direction of the first route may according to one embodiment further be based on a location of the event. The location of the event can for example be determined by the industrial control system based on sensor data provided to the industrial control system by one or more sensors in the industrial process environment. By means of the obtained location of the mobile device 3-1, 3-2 and by means of the location of the event, the first route leading to a place of exit from the industrial process environment may be determined. According to one embodiment, the step S3 of obtaining the location of the first place of exit may further be based on the location of the event. Thereby a first route that bypasses the location of the event may be obtained. This may for example be advantageous if the event involves a fire of an industrial process component. In that case, the guiding should not lead the person carrying the mobile device 3-1, 3-2 to the origin of the fire.

The direction may be obtained based on an angle between the coordinate system defined by the ear protection unit and the coordinate system defined by the industrial process environment, and on a location of the origin of the coordinate system of the ear protection unit in the coordinate system of the industrial process environment relative a location along the first route where a new direction is to be obtained, e.g. at a crossroads, in the coordinate system of the industrial process environment. The location of the ear protection unit in the industrial process environment coordinate system may for example be obtained by means of a Global Navigation Satellite System (GNSS) such as the Global Positioning System (GPS), a Wi-Fi based positioning system or other suitable indoor positioning systems. The angle between the coordinate system of the ear protection unit and the coordinate system of the industrial process environment can for example be determined by means of a gyroscope provided in the ear protection unit.

In a step S5, a 3-d sound simulating an origination from the direction is generated by the processor 5 of the mobile device 3-1, 3-2 thereby indicating the first direction in which the user is to move. The 3-d sound may be a human voice, a sound effect such as a beep, a continuous sound, or any other kind of sound, preferably having a pitch that distinguishes from the noise that is present in the industrial process environment created by the industrial process. The 3-d sound may be static as long as it is determined that the location of the mobile device 3-1, 3-2 is on the correct route moving in the direction of the 3-d sound. Alternatively, the pitch or the volume of the 3-d sound may vary e.g. increase or decrease, depending on the distance from the point in space where the 3-d sound is simulated to originate from. According to one embodiment, the step S5 of generating a 3-d sound is updated essentially in real-time to thereby indicate to a user whether he or she is navigating correctly through the industrial process environment.

In a step S6, a direction of a second route may according to one embodiment be obtained if the industrial control system has determined that a hazardous area caused by the event has spread to the first route.

An example of guiding a user 13, e.g. a maintenance engineer, of the mobile device 3-1, 3-2 in an industrial process environment I in which an event that impairs the visibility in the industrial process environment I has occurred at a location 15 will now be described with reference to Figs 4a-c.

Fig. 4a illustrates a top view of an industrial process environment I comprising a plurality of industrial process components P, P-1 and P-2. An industrial process component may for example be a tank, a valve, a turbine, a roller or a cluster or rollers for a pulp and paper mill, drying equipment, a refiner, a generator, a motor, a transformer or a boiler or a part or parts thereof.

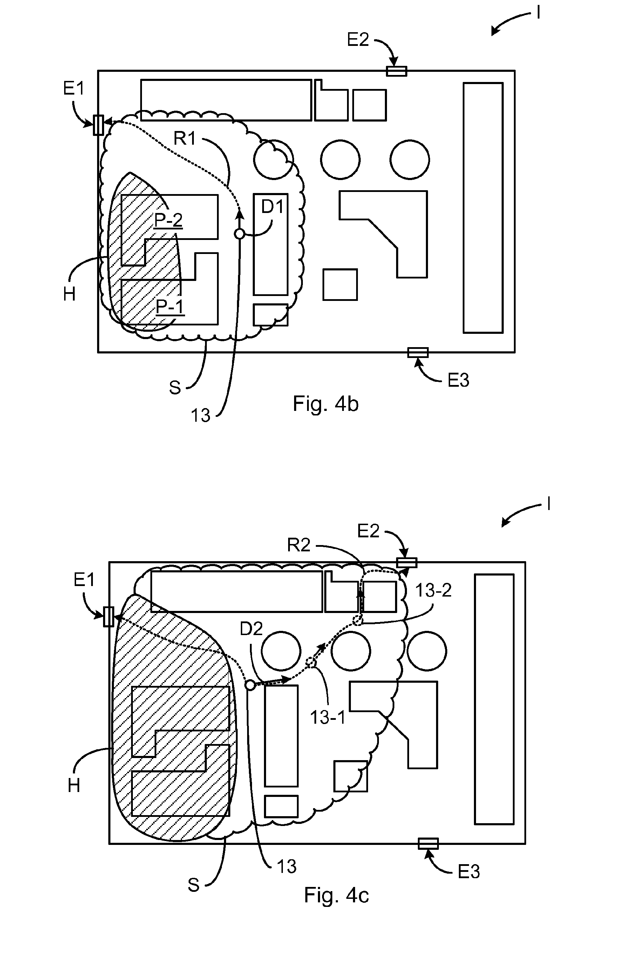

The industrial process environment I is provided with a first place of exit E1, a second place of exit E2 and a third place of exit E3, providing exit in three different directions from the industrial process environment I. An event that impairs the visibility has occurred at industrial process component P-1. A hazardous area H is the location of a fire. Due to the event, smoke S is spreading in the industrial process environment I. The smoke S surrounds the user 13 who is located in the vicinity of industrial process component P-1, thus impairing the visibility of the user 13 in the industrial process environment I. By means of sensors the industrial control system detects that the event has occurred at the industrial process component P-1. As a result the industrial control system sends instructions to the mobile device 3-1, 3-2 carried by the user 13 to provide guidance to an exit from the industrial process environment I. Based on the location of the mobile device 3-1, 3-2 and based on the location 15 of the event, a first direction D1 is obtained, leading to the first place of exit E1 via a first route R1, as shown in Fig. 4b. In Fig. 4b it can also be seen that the smoke S as well as the hazardous area H has spread to larger areas than shown at an earlier instance in time in Fig. 4a. As a next step, the processor 5 generates a 3-d sound that simulates an origination from the first direction D1. The speakers in the ear protection unit worn by the user 13 play the 3-d sound to the user 13, wherein the user 13 commences movement in the first direction D1. As the user 13 moves in the first direction D1 on the first route R1, the industrial control system receives an indication that the hazardous area H has spread to the first route R1 also blocking all alternative routes to the first place of exit E1, as shown in Fig. 4c. As a result the industrial control system, or alternatively the mobile device 3-1, 3-2, obtains a second direction D2 of a second route R2 leading to the second place of exit E2. It is to be noted that, if it would have been possible to determine another route than the first route R1 leading to the first place of exit E1, such a re-routing would have been an option instead of identifying another place of exit, i.e. the second place of exit E2. The user 13 will hear a 3-d sound that originates from the second direction D2, whereby the user 13 can safely follow the second direction D2 and thus the second route R2 for safely exiting the industrial process environment I at the second place of exit. Items 13-1 and 13-2 show the user 13 at later instances of time, as the user moves along the second route R2. It can be seen that the direction is updated along the second route R2 as necessary as the user moves along the second route R2.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of guiding a user (13) of a mobile device (3-1; 3-2) in an industrial process environment (I), wherein the method comprises:
receiving (S1) instructions from an industrial control system to provide guidance to an exit of the industrial process environment (I) in response to an event that results in impaired visibility in the industrial process environment (I), the instructions being received by the mobile device (3-1; 3-2),
obtaining (S4) a direction of a first route (R1) leading to a first place of exit (E1) of the industrial process environment (I) based on a location of the mobile device (3-1; 3-2), and
generating (S5) a 3-d sound simulating an origination from the direction so as to allow the user (13) to move in the direction.

2. The method as claimed in claim 1, wherein the obtaining (S4) of the direction of the first route (R1) is further based on a location (15) of the event.

3. The method as claimed in claim 1 or 2, comprising obtaining (S3) a location of the first place of exit (E1) from the industrial process environment (I) based on the location of the mobile device (3-1; 3-2), wherein the obtaining (S4) of the first direction is further based on the location of the first place of exit (E1).

4. The method as claimed in claim 3, wherein the obtaining (S3) of the location of the first place of exit (E1) is further based on the location (15) of the event.

5. The method as claimed in any of the preceding claims, comprising obtaining (S6) a direction of a second route (R2) if the industrial control system has determined that a hazardous area (H) caused by the event has spread to the first route (R1).

6. The method as claimed in claim 5, wherein the second route (R2) leads to a second place of exit (E2).

7. The method as claimed in any of the preceding claims, wherein the user (13) carries the mobile device (3-1; 3-2), the location of the mobile device (3-1; 3-2) thereby being indicative of a location of the user.

8. The method as claimed in any of the preceding claims, comprising obtaining (S2) the location of the mobile device (3-1; 3-2).

9. A computer program comprising computer-executable components for causing a mobile device to perform the steps recited in any one of claims 1-8 when the computer-executable components are run on a processor included in the mobile device.

10. A computer program product comprising a computer readable medium, the computer readable medium having the computer program according to claim 9 embodied therein.

11. A mobile device (3-1; 3-2) arranged to guide a user (13) of the mobile device (3-1; 3-2) in an industrial process environment (I), wherein the mobile device (3-1; 3-2) comprises:
a processor (5) arranged to:
receive instructions from an industrial control system to provide guidance to an exit of the industrial process environment (I) in response to an event resulting in impaired visibility in the industrial process environment (I), and to
obtain a direction of a first route (R1) leading to a first place of exit (E1) of the industrial process environment (I) based on a location of the mobile device (3-1; 3-2), and to generate a 3-d sound simulating an origination from the direction so as to allow the user (13) to move in the direction.

12. The mobile device (3-1; 3-2) as claimed in claim 11, wherein the processor (5) is arranged to obtain the direction of the first route further based on a location of the event.

13. The mobile device (3-1; 3-2) as claimed in claim 11 or 12, wherein the processor (5) is arranged to obtain a location of the first place of exit from the industrial process environment based on the location of the mobile device, wherein processor is arranged to obtain the first direction further based on the location of the first place of exit.

14. The mobile device (3-1; 3-2) as claimed in claim 13, wherein the processor (5) is arranged to obtain the location of the first place of exit further based on the location of the event.

15. The mobile device (3-1; 3-2) as claimed in any of claims 11-14, wherein the processor (5) is arranged to obtain a direction of a second route if the industrial control system has determined that a hazardous area caused by the event has spread to the first route.

16. The mobile device (3-1; 3-2) as claimed in any of claims 11-15, wherein the processor (5) is arranged to obtain the location of the mobile device (3-1; 3-2).

17. The mobile device (3-2) as claimed in any of claims 11-16, comprising an earmuff having speakers (11) arranged to provide 3-d audio sound generated by the processor (5).
